# EUROPEAN PATENT APPLICATION

(11) **EP 4 841 253 A1**
(43) Date of publication of application: **18.11.2026**
(21) Application number: 25738933.8
(22) Date of filing: 10.01.2025
(51) Int. Cl.: G01N 27/62

(54) **METHOD FOR PRODUCING GLYCOPEPTIDE SAMPLE**

(30) Priority: 12.01.2024 JP 2024002980
(71) Applicant: NATIONAL UNIVERSITY CORPORATION TOKAI NATIONAL HIGHER EDUCATION AND RESEARCH SYSTEM, Nagoya-shi, Aichi 464-8601 (JP)
(72) Inventor: NAKAJIMA, Kazuki, Gifu 501-1193 (JP); HANZAWA, Ken, Gifu 501-1193 (JP)
(74) Representative: Hoffmann Eitle
(86) International application number: PCT/JP2025/000688
(87) International publication number: WO 2025/150566

(57) **Abstract**

This invention aims to provide a more efficient method for producing a glycopeptide sample having a higher ratio of glycopeptides to non-glycopeptides. Provided is a method for producing a glycopeptide sample, comprising step (3) of contacting particles retaining a protein on surfaces thereof with a protease; step (4) of adding an organic solvent after step (3); and step (5) of washing particles obtained in step (4), wherein the particles are cellulose-coated particles, and/or in step (4), an ion pairing agent is added together with the organic solvent.

## Description

### Technical Field

The present invention relates to a method for producing a glycopeptide sample, for example.

### Background Art

In the field of bottom-up proteomic studies, various pretreatment methods have been investigated to improve data quality (e.g., the number of identified proteins, yield stability, etc.), increase work efficiency, and facilitate automation. One such method is the SP3 (single-pot, solid-phase-enhanced sample preparation) method, in which magnetic particles having diameters ranging from several tens of nanometers to several micrometers are used to perform proteomic sample preparation within a single tube (NPL 1). Proteins in the sample solution are retained on the magnetic particles by aggregation induced by the addition of an organic solvent (e.g., ethanol, acetonitrile, etc.). The retained proteins are then washed and subjected to digestion with a protease. Purification using the magnetic particles is highly efficient, allowing the use of strong denaturants and their subsequent removal, thus improving digestion efficiency. Peptides produced by digestion can also be retained and purified on the magnetic particles by the addition of acetonitrile.

Meanwhile, in glycoproteomics, a branch of proteomics that focuses on protein glycosylation, it is difficult to obtain comprehensive data by analyzing total peptides prepared from biological samples using standard proteomic methods. This is because peptides with glycosylation (glycopeptides) generally exhibit lower detection sensitivity in mass spectrometry than non-glycosylated peptides.

Improvement of data quality in glycopeptide analysis requires the depletion of non-glycosylated peptides from the total peptide mixture generated by protein digestion and the isolation of glycopeptides. For selective purification of glycopeptides, purification methods primarily based on the principle of hydrophilic interaction liquid chromatography (HILIC), which utilize the glycan moiety attached to glycopeptides for separation, are most commonly used. After glycopeptides are retained on a hydrophilic stationary phase under high-organic solvent conditions (mainly acetonitrile) and washed, the glycopeptides are eluted with a water-rich solvent. However, pretreatment of proteins and glycopeptide-specific purification are performed independently, which is not suitable for efficient processing, particularly in automated protocols for large-scale analysis.

### Citation List

### Non-patent Literature

NPL 1: Mol Syst Biol. 2014 Oct 30; 10(10): 757. DOI: 10.15252/msb.20145625. PMID: 25358341; PMCID: PMC4299378.

### Summary of Invention

### Technical Problem

The present invention aims to provide a more efficient method for producing a glycopeptide sample having a higher ratio of glycopeptides to non-glycopeptides.

### Solution to Problem

As a result of extensive studies in view of the above aim, the present inventors found that the above aim can be achieved by a method for producing a glycopeptide sample, comprising step (3) of contacting particles retaining a protein on surfaces thereof with a protease; step (4) of adding an organic solvent after step (3); and step (5) of washing particles obtained in step (4), wherein the particles are cellulose-coated particles, and/or in step (4), an ion pairing agent is added together with the organic solvent. Based on this finding, the present inventors conducted further studies and, as a result, completed the present invention. Specifically, the present invention comprises the following aspects.

Item 1. A method for producing a glycopeptide sample, comprising:
step (3) of contacting particles retaining a protein on surfaces thereof with a protease;
step (4) of adding an organic solvent after step (3); and
step (5) of washing particles obtained in step (4), wherein
the particles are hydrophilic polymer-coated particles, and
in step (4), an ion pairing agent is added together with the organic solvent.

Item 2. The production method according to Item 1, wherein the hydrophilic polymer-coated particles are polysaccharide-coated particles.

Item 3. The production method according to Item 2, wherein the polysaccharide-coated particles are cellulose-coated particles.

Item 4. The production method according to Item 1, further comprising, prior to step (3), step (2) of contacting the protein with the particles in a solution containing an organic solvent to retain the protein on surfaces of the particles.

Item 5. The production method according to Item 4, wherein step (2) comprises a step of dispensing a previously prepared particle suspension containing the particles and a thickening agent.

Item 6. The production method according to Item 5, wherein the thickening agent is glycerol.

Item 7. The production method according to Item 1, wherein the hydrophilic polymer-coated particles are carboxylic acid polymer-coated particles.

Item 8. The production method according to Item 1, wherein the hydrophilic polymer-coated particles are magnetic particles.

Item 9. The production method according to Item 1, wherein the ion pairing agent is an organic acid.

Item 10. The production method according to Item 9, wherein the ion pairing agent contains a halogenated short-chain fatty acid.

Item 11. The production method according to Item 10, wherein the ion pairing agent is a mixture containing a halogenated short-chain fatty acid and a non-halogenated short-chain fatty acid.

Item 12. The production method according to Item 1, wherein the organic solvent is at least one selected from the group consisting of alcohols, acetonitrile, and acetone.

Item 13. The production method according to any one of Items 1 to 12, wherein all of the steps are performed in a single container.

Item 14. The production method according to any one of Items 1 to 12, wherein the glycopeptide sample is a mass spectrometry sample.

Item 15. A glycopeptide sample obtained by the production method according to any one of Items 1 to 12.

Item 16. A method for analyzing protein glycosylation, comprising a step of subjecting the glycopeptide sample according to Item 15 to mass spectrometry.

### Advantageous Effects of Invention

The present invention can provide a more efficient method for producing a glycopeptide sample having a higher ratio of glycopeptides to non-glycopeptides. The present invention can also provide a method for analyzing protein glycosylation using the glycopeptide sample.

### Brief Description of Drawings

Fig. 1 shows an overview of the experimental procedure of Test Example 1.
Fig. 2 shows the results of a comparison of the number of peptides identified by Byonic search in Test Example 1.
Fig. 3 shows the abundance (sum) of detected glycopeptides with N-linked glycan in Test Example 1.
Fig. 4 shows the abundance (sum) of detected non-glycopeptides without N-linked glycan in Test Example 1.
Fig. 5 shows representative examples of quantitative values of peptides derived from major blood glycoproteins in Test Example 1. The amino acid sequences in the figure correspond to SEQ ID NOs: 1 to 6 in the Sequence Listing.
Fig. 6 shows an overview of the experimental procedure of Test Example 2.
Fig. 7 shows the abundance (sum) of detected non-glycopeptides without N-linked glycan in Test Example 2.
Fig. 8 shows photographs of glycopeptides during HILIC purification in Test Example 2.
Fig. 9 shows micrographs of a carboxyl group-modified polymer magnetic particle suspension and a cellulose magnetic particle suspension in Test Example 3, and photographs of the exterior of the container 1 minute, 6 minutes, and 10 minutes after stirring.
Fig. 10 shows the compositions of HILIC wash solutions and the number of identified N-linked glycopeptides prepared from untreated serum in Test Example 4.
Fig. 11 shows the results of a comparison of the recovery of N-linked glycopeptides prepared from serum (untreated and HSA- and Ig-depleted) in Test Example 4. The amino acid sequences in the figure correspond to SEQ ID NOs: 7 and 8 in the Sequence Listing.

### Description of Embodiments

In the present specification, "contain" and "comprise" include the concepts of comprising, consisting essentially of, and consisting of.

In one embodiment, the present invention relates to a method for producing a glycopeptide sample, comprising: step (3) of contacting particles retaining a protein on surfaces thereof with a protease; step (4) of adding an organic solvent after step (3); and step (5) of washing particles obtained in step (4), wherein the particles are cellulose-coated particles, and/or in step (4), an ion pairing agent is added together with the organic solvent (in the present specification, the method is sometimes referred to as "the production method of the present invention").

The protein is not particularly limited as long as it is a protein for which analysis of its fragmented peptides is required. In a preferred embodiment, the protein is a protein derived from a biological sample of a subject. Examples of biological species of the subject and biological species from which the protein is derived include various mammalian animals, such as humans, monkeys, mice, rats, dogs, cats, and rabbits, with humans being preferred. The biological sample is not particularly limited as long as it contains a protein. Examples include body fluids, skin, mucous membranes, and internal tissues. Among these, from the viewpoint of ease of collection and low invasiveness, body fluids, skin, and mucous membranes are preferred, and body fluids are more preferred. Examples of body fluids include blood, follicular fluid, menstrual blood, saliva, cerebrospinal fluid, synovial fluid, urine, tissue fluid, sweat, and tears. Examples of mucous membranes include oral mucosa and nasal mucosa. Usually, the biological sample is subjected to an appropriate pretreatment depending on the type of sample, and it is preferable to remove certain components and to concentrate and/or purify proteins. In one embodiment of the present invention, from the viewpoint of efficiently treating a large number of samples, the biological sample is preferably a biological sample that has not been subjected to depletion of abundant proteins (e.g., albumin (in particular, serum albumin) and/or immunoglobulins (in particular, immunoglobulin-G)). Such depletion may be performed by, for example, chromatography, centrifugation, or the like, based on differences in affinity, adsorption, solubility, and the like, depending on the type of abundant proteins. The depletion may be a treatment to deplete, for example, 30 mass% or more, 40% mass% or more, 50 mass% or more, 60 mass% or more, 70 mass% or more, 80 mass% or more, 90 mass% or more, or 95 mass% or more of abundant proteins.

In one embodiment of the present invention, the protein can be a protein contained in a blood sample or a sample obtained by depleting certain components (e.g., albumin and antibodies such as IgG) from the blood.

The protein is preferably a protein that has been subjected to a denaturation treatment, a reduction treatment, an alkylation treatment, and the like, from the viewpoint of hydrolysis efficiency by a protease, suitability for mass spectrometry, and the like. From this viewpoint, the production method of the present invention preferably includes step (1) of subjecting the protein to at least one treatment selected from the group consisting of a denaturation treatment, a reduction treatment, and an alkylation treatment prior to step (3) (in a preferred embodiment, prior to step (2)).

The denaturation treatment is not limited as long as it is a treatment for unfolding the folded structure of a protein. Preferably, the denaturation treatment is performed using a protein denaturant such as a surfactant. Examples of surfactants for use in the denaturation treatment include anionic surfactants, such as dodecyl sulfate, deoxycholate, and lauroyl sarcosinate. In the production method of the present invention, the solution can be replaced because the protein is treated while being retained on the surfaces of the particles as in step (3). This allows use of components exhibiting strong denaturing activity, which would strongly affect protease activity. Thus, among the components mentioned above, alkyl sulfates, such as dodecyl sulfate (e.g., a sodium salt thereof), are preferred.

The reduction treatment is not limited as long as it is a treatment for cleaving disulfide bonds within a protein and/or between protein molecules. Preferably, it is performed using a reducing agent. Examples of reducing agents for use in the reduction treatment include tris(2-carboxyethyl)phosphine hydrochloride, dithiothreitol, 2-mercaptoethanol, and tributylphosphine. Among these, tris(2-carboxyethyl)phosphine hydrochloride is preferred from the viewpoint of strong denaturing activity.

The alkylation treatment is not limited as long as it is a treatment for irreversibly alkylating cysteine residues in a protein. Preferably, it is performed using an alkylating agent. Examples of alkylating agents for use in the alkylation treatment include haloacetamides, such as chloroacetamide and iodoacetamide, with chloroacetamide being preferred.

More specifically, step (1) can be performed by, for example, reacting a protein in a solution containing at least one selected from the group consisting of a surfactant, a reducing agent, and an alkylating agent. In one embodiment (in particular, when a phosphine-based reducing agent is used as the reducing agent), a solution containing a reducing agent and an alkylating agent (and optionally further containing a surfactant) can be used. In another embodiment (in particular, when a reducing agent based on thiol-group reactions (e.g., dithiothreitol, 2-mercaptoethanol, etc.) is used), an alkylating agent can be added after a solution containing an educing agent (and optionally containing a surfactant) is used.

When the solution in step (1) contains a surfactant, its concentration is, for example, 0.1 to 10 w/v%, preferably 0.2 to 5 w/v%, and more preferably 0.5 to 2 w/v%. When the solution in step (1) contains a reducing agent, its concentration is, for example, 1 to 100 mM, preferably 2 to 50 mM, and more preferably 5 to 20 mM. When the solution in step (1) contains an alkylating agent, its concentration is, for example, 5 to 200 mM, preferably 10 to 100 mM, and more preferably 20 to 60 mM. Water is usually used as the solvent.

The treatment temperature in step (1) is, for example, 15 to 100°C, preferably 40 to 100°C, more preferably 60 to 100°C, and even more preferably 80 to 98°C. The treatment time can be set as appropriate depending on the treatment temperature. For example, it is 2 minutes to 3 hours. In the case of treatment at a high temperature (e.g., 90°C or higher), the treatment time is preferably 2 minutes to 1 hour, more preferably 2 to 30 minutes, and even more preferably 5 to 15 minutes.

The particles are not particularly limited as long as they retain proteins and peptides on their surfaces in an organic solvent. The material of the particles is not particularly limited. Examples include particles made of metal, such as gold, silver, copper, iron, aluminum, nickel, manganese, titanium, and oxides of these metals; particles made of resin, such as polystyrene and latex; and silica particles. The shape of the particles is not particularly limited. Examples include spheres, rectangular prisms, cubes, triangular pyramids, and similar shapes. The particles may be coated with other molecules or modified with functional groups (e.g., epoxy groups, amino groups, carboxy groups, azido groups, etc.). The particle average particle size is not particularly limited, and it is 100 nm to 500 µm, for example. In one embodiment, the particle average particle size is, for example, 100 nm to 10 µm, more preferably 300 nm to 5 µm, and even more preferably 500 nm to 3 µm. In one embodiment, the particle average particle size is, for example, 500 nm to 300 µm, preferably 1 µm to 200 µm, and more preferably 10 µm to 100 µm.

In the production method of the present invention, the particles are preferably hydrophilic polymer-coated particles, and more preferably polysaccharide-coated particles and/or carboxylic acid polymer-coated particles. The hydrophilic polymer is not particularly limited as long as it is a polymer having a hydrophilic functional group, such as a carboxy group or a hydroxy group. The polysaccharide is not particularly limited. Examples include cellulose, dextran, and agarose. Examples of carboxylic acid polymers include styrene-acrylic acid copolymers and glycidyl methacrylate polymers.

In the glycopeptide purification process of step (4), since the hydroxyl groups and/or carboxyl groups constituting the polysaccharide molecules can be used as HILIC hydrophilic groups on the hydrophilic stationary phase, glycopeptide samples can be obtained more efficiently based on the presence or absence of glycans (differences in hydrophilic interactions). The particles are preferably polysaccharide-coated particles and particularly preferably cellulose-coated particles from the viewpoints of more efficiently obtaining a glycopeptide sample having a higher ratio of glycopeptides to non-glycopeptides and achieving such an effect without the use of a highly corrosive reagent (e.g., TFA) as an ion pairing agent.

In the production method of the present invention, the particles are preferably magnetic particles. The magnetic particles may be electromagnet particles. This enables simple and rapid replacement of the solution surrounding the particles, and renders the production method of the present invention more suitable for automated protocols for large-scale analysis.

Commercially available particles can be directly used, or the particles can be produced according to or based on a known method.

The particles retaining a protein on their surfaces can be obtained according to or based on a known method. For example, the protein can be retained on the surfaces of the particles by protein aggregation induced by the addition of an organic solvent. From this viewpoint, the production method of the present invention preferably includes, prior to step (3), step (2) of contacting the protein with the particles in a solution containing an organic solvent to retain the protein on surfaces of the particles.

In step (2), the protein and the particles are dispensed into a single container, whereby they can be contacted with each other in the container. In the course of conducting research, the present inventors focused on the problem that the particles settle in the container before dispensing so that the dispensing cannot be efficiently performed. The problem becomes pronounced particularly when handling a large number of samples (e.g., 10 or more, 20 or more, 50 or more, 70 or more, or 90 or more) with an automatic dispenser. Thus, in order to suppress settling of the particles before dispensing, step (2) preferably includes a step of dispensing a previously prepared particle suspension containing the particles and a thickening agent. This makes it possible to suppress settling of the particles in the container before dispensing, avoid/reduce stirring for homogenizing the particles before dispensing, and efficiently perform dispensing.

The thickening agent is not particularly limited. From the viewpoint of reducing the impact on the glycopeptide preparation, preferably, the use of a polymer-based thickening agent (e.g., synthetic polymers, thickening polysaccharides, etc.) is avoided. From the viewpoint of suppression of particle sedimentation rate and ease of removal, the thickening agent is preferably a relatively low-molecular-weight polyol, and more preferably a polyol having a molecular weight of 50 to 300 (more preferably 50 to 200, 60 to 150, 70 to 120, or 70 to 100). The polyol is a dihydric or trihydric alcohol, for example. Preferred examples of such polyols include glycerol and propylene glycol. Glycerol is particularly preferred. The concentration (vol%) of the thickening agent in the previously prepared particle suspension is not particularly limited as long as the viscosity is such that the particle sedimentation rate can be suppressed and the particle suspension can be used for dispensing. For example, when glycerol is used, the concentration is preferably 5 to 90%, more preferably 10 to 90%, even more preferably 20 to 85%, still more preferably 30 to 85%, particularly preferably 40 to 80%, and especially preferably 50 to 80%.

The organic solvent for use in step (2) is not particularly limited as long as it allows a protein to be retained on the surfaces of the particles by protein aggregation. Examples include C1-C4 alcohols, such as ethanol (ethanol and 2-propanol are particularly preferred), acetonitrile, and acetone. Preferred examples include C1-C4 alcohols and acetonitrile. The concentration of the organic solvent in the solution in step (2) is 40 to 90 v/v%, for example. When the organic solvent is ethanol, the concentration is preferably 70 to 90 v/v%, and more preferably 75 to 85 v/v%. When the organic solvent is acetonitrile, the concentration is preferably 40 to 60%, and more preferably 45 to 55 v/v%.

The treatment temperature in step (2) is, for example, 10 to 40°C, preferably 15 to 30°C. The treatment time is, for example, 2 to 30 minutes, preferably 5 to 15 minutes. During the treatment, the solution is preferably stirred, and more preferably shaken (e.g., 500 to 2000 rpm).

After step (2), preferably, the particles retaining a protein on their surfaces are washed prior to step (3). The solution for use in step (2) can be used as a wash solution. Preferably, washing is performed multiple times (e.g., 2 to 5 times, preferably 2 or 3 times).

Preferably, the solvent is removed by drying or the like after step (2) or washing.

The protease for use in step (3) is not particularly limited as long as it can fragment proteins. Examples include endoproteases, such as trypsin, Asp-N, Lys-C, and Glu-C, and exopeptidases, such as aminopeptidases and carboxypeptidases.

Step (3) is typically performed in a solution.

The concentration of the protease in the solution in step (3) is, for example, 0.01 to 0.5 µg/µL, preferably 0.002 to 0.1 µg/µL, and more preferably 0.01 to 0.1 µg/µL. When the protease is trypsin, the mass ratio of protease and protein is, for example, 1:1000 to 1:10 (v/v), preferably 1:200 to 1:50. Preferably, the solution contains a surfactant at, for example, 2 to 30 mM, preferably 5 to 20 mM, to promote digestion and to promote redissolution of the sample when the solvent is dried after step (2) or washing. A preferred surfactant is an anionic surfactant having a carboxy group and exhibiting relatively weak protein-denaturing activity (e.g., deoxycholate, lauroyl sarcosinate, etc.). The solution may further contain a buffer, a metal salt necessary for protease activity, and the like.

The treatment temperature in step (3) is, for example, 20 to 40°C, preferably 30 to 40°C, more preferably 35 to 39°C, and particularly preferably 36 to 38°C. The treatment time is, for example, 30 minutes to 48 hours, preferably 8 to 24 hours. During the treatment, the solution is preferably stirred, and more preferably shaken (e.g., 500 to 2000 rpm).

By step (3), particulate proteins are fragmented to generate peptides (glycopeptides and non-glycopeptides).

In step (4), an organic solvent is added after step (3).

The organic solvent for use in step (4) mainly includes acetonitrile among the organic solvents exemplified in step (2).

The amount and concentration of the organic solvent to be added in step (4) are not particularly limited as long as the concentration of the organic solvent in the container is such that peptides are retained on the particles (e.g., 70 to 100 v/v%, preferably 75 to 90 v/v%).

In step (4), preferably, an ion pairing agent is added together with an organic solvent from the viewpoint of more efficiently obtaining a glycopeptide sample having a higher ratio of glycopeptides to non-glycopeptides. The ion pairing agent is not particularly limited as long as it is used for peptide analysis. As the ion-pairing agent, for example, organic acids can be widely used. As the organic acid, fatty acids can be suitably used, and among them, short-chain fatty acids (fatty acids having 5 or fewer carbon atoms) can be particularly suitably used. Preferred examples of short-chain fatty acids include formic acid, acetic acid, propionic acid, isobutyric acid, and butyric acid. Formic acid is particularly preferred. The ion pairing agent is preferably a halogenated short-chain fatty acid from the above viewpoint and from the viewpoint of ease of removal. The halogenated short-chain fatty acid is particularly preferably a halogenated acetic acid, and especially preferably a fluoroacetic acid (in particular, trifluoroacetic acid). Ordinary (non-halogenated) short-chain fatty acids (formic acid, acetic acid, etc.) can also be used. Use of a halogenated short-chain fatty acid and a non-halogenated short-chain fatty acid in combination can improve the recovery rate of hydrophobic glycopeptides, particularly when a biological sample that has not been subjected to depleting of abundant proteins is used. In this case, the ratio of non-halogenated short-chain fatty acids to halogenated short-chain fatty acids (the mass of non-halogenated short-chain fatty acids/the mass of halogenated short-chain fatty acids) is, for example, 1 to 500, preferably 2 to 300, more preferably 5 to 200, even more preferably 10 to 100, still more preferably 20 to 80, yet even more preferably 30 to 70, and yet still more preferably 40 to 60. When an ion pairing agent is added, it can be added such that the concentration of the ion pairing agent in the container is, for example, 0.05 to 10 v/v, preferably 0.1 to 5 v/v. More preferably, in the case of a non-halogenated short-chain fatty acid, such as formic acid, it is added to a concentration of 1 to 5% v/v; and in the case of a halogenated short-chain fatty acid, such as trifluoroacetic acid, it is added to a concentration of 0.1 to 1% v/v.

The treatment temperature in step (4) is, for example, 10 to 40°C, preferably 15 to 30°C. The treatment time is, for example, 5 minutes to 2 hours, preferably 15 to 45 minutes. During the treatment, the solution is preferably stirred, and more preferably shaken (e.g., 500 to 2000 rpm).

In step (5), the particles obtained in step (4) are washed. The solution used in step (2) can be used as a wash solution. Preferably, washing is performed multiple times (e.g., 2 to 5 times, preferably 2 or 3 times). In the final stage of washing, a high concentration (preferably 90 v/v% or higher, particularly preferably 95 v/v% or higher) of acetonitrile is preferably used for washing.

After step (5), a peptide elution treatment from the particles is preferably performed. As an eluate, a solution having a relatively low concentration (e.g., 50 v/v% or lower, preferably 40 v/v% or lower) of the above organic solvent can be used. Hydrolysis of sialic acid can be suppressed when the elution is performed under neutral conditions rather than under acidic conditions. The eluate preferably contains ammonium formate in an amount of, for example, 3 to 30 mM, preferably 5 to 15 mM. The treatment temperature for the elution treatment is, for example, 10 to 40°C, preferably 15 to 30°C. The treatment time is, for example, 2 minutes to 1 hour, preferably 5 to 30 minutes. During the treatment, the solution is preferably stirred, and more preferably shaken (e.g., 500 to 2000 rpm).

Preferably, the solvent is removed by drying or the like after step (5) or the elution treatment.

In the production method of the present invention, all of the steps can be performed in a single tube. Thus, the production method is particularly suitable for automated protocols for large-scale analysis.

The glycopeptide sample obtained by the production method of the present invention has a higher ratio of glycopeptides to non-glycopeptides. Thus, the glycopeptide sample obtained by the production method of the present invention is suitable as a sample for use in an analytical method, particularly mass spectrometry, in which the detection sensitivity of glycopeptides is generally lower than that of non-glycopeptides. Thus, in one embodiment of the present invention, the glycopeptide sample obtained by the production method of the present invention can be analyzed by mass spectrometry.

The mass spectrometry can be performed according to or based on a known method. Liquid chromatography-mass spectrometry is preferred since it is suitable for glycopeptide analysis.

The ionization method in mass spectrometry is not particularly limited. Examples of ionization methods for peptides include laser desorption ionization (LDI) and electrospray ionization (ESI).

The method for measuring the mass-to-charge ratio in mass spectrometry is not particularly limited. For example, time-of-flight, magnetic sector, quadrupole, ion trap, Fourier transform ion cyclotron resonance, and tandem types can be used.

The technology of the present invention can be used, for example, for the discovery of glycopeptide biomarkers in biological samples (e.g., plasma, urine, cerebrospinal fluid, saliva, autopsy tissues, etc.). In addition, glycoproteomics is now an essential technique for quality control of biopharmaceuticals, such as antibody therapeutics. The technology of the present invention also enables high-throughput evaluation of antibody therapeutics.

### Examples

### Example 1

The present invention is described in detail below with reference to the Examples; however, the present invention is not limited thereto.

### Test Example 1. Comparison of protein pretreatment and glycopeptide purification conditions using magnetic particles

### <1-1. Method>

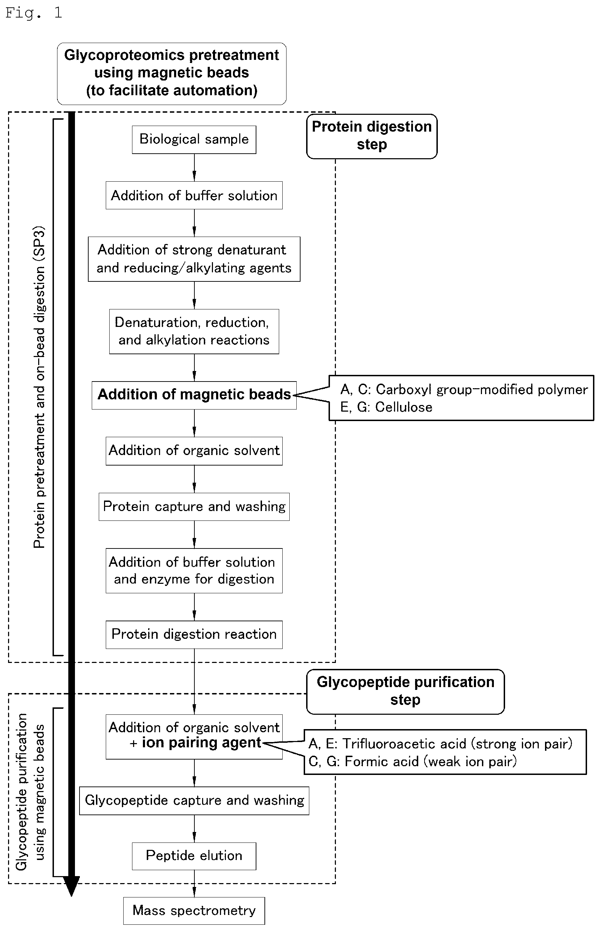

Comparisons were made with respect to digestion, HILIC purification, and magnetic particle types. As a starting sample, an amount equivalent to 10 µL of plasma that had been depleted of albumin and IgG and centrifugally dried was used. For each condition, experimental procedures were carried out in parallel using three samples. Table 1 shows an overview of each condition. Fig. 1 shows an overview of the experimental procedure.

**Table 1**

| Condition | Digestion Condition | HILIC Purification Solution | Magnetic Particles |
|---|---|---|---|
| A | On beads | 1% TFA 90% ACN | Sera-Mag SpeedBead carboxylate modified, E3:E7 = 1:1 mixture (carboxyl group-modified polymer magnetic particles; Cytiva) |
| C | On beads | 3% FA 85% ACN | Sera-Mag SpeedBead carboxylate modified, E3:E7 = 1:1 mixture |
| E | On beads | 1% TFA 82.5% ACN | ReliaPrep Resin (cellulose magnetic particles; Promega) |
| G | On beads | 3% FA 77.5% ACN | ReliaPrep Resin |

### <1-1-1. Protein denaturation, reduction, and alkylation>

As a starting sample, an amount equivalent to 10 µL of plasma that had been depleted of albumin and IgG and centrifugally dried was used. The operation was performed in a 1.5-mL low protein-binding polypropylene tube (ProteinLobind, available from Eppendorf). A solution for denaturing, reducing disulfide bonds in, and alkylating sample proteins (1% (w/v) sodium dodecyl sulfate (SDS), 10 mM tris(2-carboxyethyl)phosphine hydrochloride (TCEP-HCl), and 40 mM chloroacetamide (CAA)) was added. The sample was redissolved by shaking in a thermomixer at 1,000 rpm and 25°C for 1 min, and was then subjected to denaturation, reduction, and alkylation reaction by heat treatment (95°C, 10 min).

### <1-1-2. Protein washing using magnetic particles>

After the sample solution was cooled to about room temperature, 30 µL of a 50 µg/µL mixed magnetic particle solution was added. The magnetic particles varied depending on the conditions. In Conditions A and C, Sera-Mag SpeedBeads, carboxylate-modified, hydrophilic [E7]/hydrophobic [E3] = 1:1 (25 µg/µL each, equivalent to a total of 1.5 mg of magnetic particles, available from Cytiva), were used. In Conditions E and G, ReliaPrep Resin (equivalent to 1.5 mg of magnetic particles, available from Promega) was used. The solution was mixed by shaking in a thermomixer at 1,000 rpm and 25°C for 1 min. Subsequently, in order to aggregate proteins on the beads, 520 µL of ethanol (final concentration: 80% v/v) was added, followed by shaking in a thermomixer at 1,000 rpm and 25°C for 10 min. The tube containing the sample solution was placed on a magnetic stand and left to stand for 2 min. The supernatant was then removed by pipetting while the magnetic particles were collected on the tube wall using a magnet. For washing, an additional 800 µL of 80% (v/v) ethanol was added thereto. After leaving to stand for 2 min, the supernatant was removed. This washing operation was repeated twice. As a subsequent washing operation, an additional 800 µL of acetonitrile was added thereto. After leaving to stand for 2 min, the supernatant was removed. The solution was left to stand with the tube uncapped on an aluminum block heater at 45°C for 15 min, thereby evaporating the acetonitrile and drying the beads.

### <1-1-3. On-bead protein digestion>

Subsequently, 50 µL of a 2-fold concentrated buffer solution containing surfactants for sample redissolution and promotion of digestion (4.8 mM SDC, 4.8 mM SLS, and 200 mM Tris-HCl; pH 8.5) was added. The sample was resuspended by shaking in a thermomixer at 2,000 rpm and 25°C for 5 min (in many cases, the protein-bead aggregates cannot be completely dispersed at this point). 50 µL of an enzyme solution for protein digestion (0.02 µg/µL Trypsin/Lys-C mix, 4 mM CaCl₂, and 2 mM acetic acid (the acetic acid is derived from the enzyme reconstitution solution)) was added thereto, and a digestion reaction was carried out in a thermomixer at 1,000 rpm and 37°C for 16 hours (the protein-bead aggregates are almost completely dispersed by shaking after the addition of the digestive enzyme).

### <1-1-4. Glycopeptide purification>

* The magnetic particles added in the previous step were also used directly for glycopeptide purification.

First, the droplets were spun down by flash centrifugation (tabletop microcentrifuge).

200 µL of a glycopeptide loading solution for capturing glycopeptides on the beads was first added, and the digestion reaction was terminated. As the glycopeptide loading solution (which varies depending on the conditions), acetonitrile (ACN) containing 1% (v/v) trifluoroacetic acid (TFA) was used in Conditions A and E, and acetonitrile containing 3% (v/v) formic acid (FA) was used in Conditions C and G.

10 µL of a standard glycopeptide solution (1 µM sialylglycopeptide, 1 µM G2-peptide; available from Tokyo Chemical Industry Co., Ltd.) was added thereto, followed by shaking in a thermomixer at 1,000 rpm and 25°C for 30 sec.

The glycopeptide loading solution corresponding to each condition was further added. The amount added was as follows: 900 µL in Condition A, 550 µL in Condition C, 400 µL in Condition E, and 240 µL in Condition G. Glycopeptides were captured by shaking in a thermomixer at 1,500 rpm and 25°C for 30 min. The droplets were spun down by flash centrifugation, and the tube containing the sample solution was placed on a magnetic stand and left to stand for 2 min. The supernatant was then removed.

Further, a wash solution was added for a washing treatment, followed by shaking at 1,500 rpm and 25°C for 30 min. The droplets were spun down by flash centrifugation, and the tube containing the sample solution was placed on a magnetic stand and left to stand for 2 min. The supernatant was then removed. This operation was repeated twice. The amount of the wash solution was 800 µL, and its composition varied depending on the conditions. In Condition A, 90% acetonitrile containing 1% TFA was used. In Condition C, 85% acetonitrile containing 3% formic acid was used. Condition E, 82.5% acetonitrile containing 1% TFA was used. In Condition G, 77.5% acetonitrile containing 3% formic acid was used. The concentration is expressed in volume percent (v/v).

Subsequently, while the tube containing the sample-beads was placed on the magnetic stand, 800 µL of a TFA rinse solution (98% (v/v) ACN) for removing TFA surrounding the beads was added and left to stand for 2 min, and the supernatant was then removed. Subsequently, a 300 µL of a neutral elution solution (30% (v/v) acetonitrile containing 20 mM ammonium formate) was added to elute glycopeptides from the beads, followed by shaking in a thermomixer at 1,000 rpm and 25°C for 10 min. After leaving to stand for 5 min on the magnetic stand, the supernatant separated from the beads was collected and transferred to a fresh low-binding 1.5-mL polypropylene tube, and the solution was dried using a centrifugal evaporator.

### <1-1-5. Glycopeptide redissolution and LC/MS measurement (common to all conditions)>

The dried glycopeptide sample was redissolved in 60 µL of a 0.5% (v/v) aqueous acetic acid solution, transferred into a filter (Millex LH 45 µm, 4 mM, Merck Millipore) mounted on a low-binding 0.5-mL PP tube, and passed through and filtered by centrifugation at 2,000 × g and 25°C for 2 min. Further, 40 µL of a 0.1% (v/v) aqueous acetic acid solution was passed through the filter to rinse and dilute the sample. The sample solution was vortex-mixed, and a 1:10 diluted plasma glycopeptide solution (0.1 µL plasma/µL) was thus obtained.

For the measurement, the 1: 10 diluted plasma glycopeptide solution was transferred to a low-binding HPLC vial made of TPX resin (0.3-mL ProteoSave-coated, AMR), and was diluted by adding a 0.1% (v/v) aqueous formic acid solution in an amount four times the volume of the plasma glycopeptide solution to obtain a 1:50 diluted plasma glycopeptide solution, which was then set in an autosampler for high-performance liquid chromatography (HPLC).

The glycopeptide sample was analyzed using a method based on liquid chromatography-mass spectrometry. The instruments used were a nano-flow high-performance liquid chromatography (HPLC) system (UltiMate 3000 RSLCnano HPLC system, Thermo Fisher Scientific) and a quadrupole-Orbitrap mass spectrometer (Orbitrap Exploris 240, Thermo Fisher Scientific).

As the mobile phases for HPLC, mobile phase A was ultrapure water containing 0.1% (v/v) formic acid, and mobile phase B was acetonitrile containing 0.1% (v/v) formic acid. The column was an emitter-integrated nano-HPLC capillary column (C18, 0.075 × 150 mM, 3 µm; available from Nikkyo Technos Co., Ltd.). The flow rate during sample separation was set to 0.30 µL/min, and the column temperature was set to 40°C. The proportion of mobile phase B was maintained at 0% from 0 to 2 min of the elution, linearly increased to 1% from 2 to 2.5 min, to 40% from 2.5 to 35 min, and then to 95% from 35 to 40 min.

For the mass spectrometer, the ion source settings were as follows: spray voltage: 1800 V; and ion transfer tube temperature: 275°C.

The Full MS scan settings were as follows: Orbitrap resolution: 120,000; scan range: 500-1800 m/z; RF-lens: 70%; normalized AGC Target: 300%; maximum injection time: 50 ms; microscans: 1; and polarity: positive. The filter settings for data-dependent MS² were as follows: MIPS: peptide; intensity threshold: 1.0e4; charge state: 2-8; dynamic exclusion duration: 20 s; and dynamic exclusion mass tolerance: High, 10 ppm; Low, 10 ppm. The data-dependent MS² (ddMS²) acquisition settings were as follows: data dependent mode: cycle time (1.5 s); isolation window: 1.6 m/z; collision energy type: normalized; HCD collision Energy: 20, 30, 40 (%); Orbitrap resolution: 15,000; scan range: 150-2000 m/z; normalized AGC Target: 200%; and maximum injection time: 50 ms.

The measurements were performed under two conditions: Full MS and data-dependent MS² (ddMS²); and Full MS alone. The sample injection volume was set to 5 µL (equivalent to 0.1 µL of plasma) in the former (data-dependent analysis; Full MS and ddMS²), and to 2.5 µL (equivalent to 0.05 µL of plasma) in the latter (Full MS alone).

The acquired LC/MS raw data files were searched using peptide analysis software for glycopeptides, Byonic (Protein Metrics), for glycopeptide identification, and were analyzed using Progenesis QI for Proteomics (Waters) for data alignment in combination with Byonic search to perform glycopeptide identification and quantitative comparison.

### <1-2. Results>

### <1-2-1. Comparison of number of peptides identified by Byonic search>

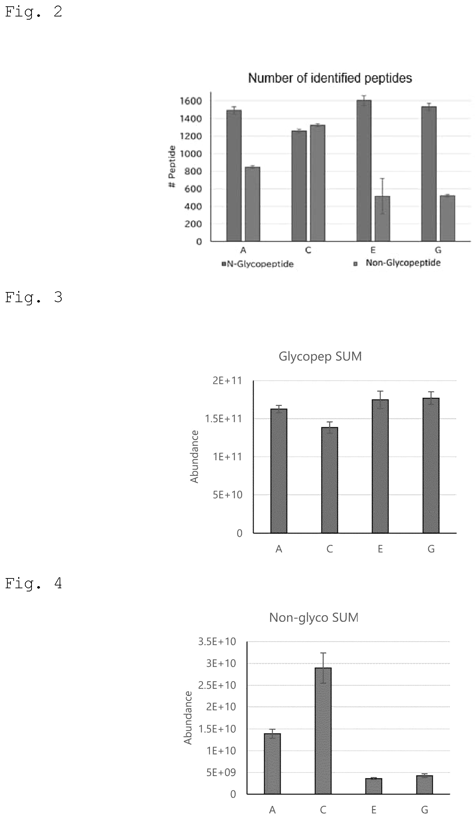

Fig. 2 shows the results of comparison of the number of peptides identified by Byonic search. Fig. 2 shows the numbers of peptides identified under each condition based on data-dependent MS² analysis for glycopeptides (N-linked glycopeptides; blue bars) and non-glycopeptides (peptides without N-linked glycosylation; red bars) .

As a whole, the number of detected glycopeptides was slightly higher when the cellulose magnetic particles were used (E and G) than when the carboxyl group-modified magnetic particles were used (A and C).

The number of identified non-glycopeptides (peptides without N-linked glycans), which serve as interfering substances in glycopeptide detection, was lower when cellulose magnetic particles were used (E and G), indicating that a higher degree of glycopeptide purification was achieved.

In HILIC purification using the carboxyl group-modified magnetic particles, the number of identified glycopeptides was higher and the number of identified non-glycopeptides was lower when TFA was added (A) than when formic acid was added (C), indicating that a higher degree of glycopeptide purification was achieved.

In HILIC purification using the cellulose magnetic particles, the number of identified glycopeptides was slightly higher when TFA was added (E) than when formic acid was added (G). However, no remarkable difference was observed.

The concentration of acetonitrile (ACN) used varies depending on the magnetic particles (the carboxyl group-modified polymer magnetic particles or the cellulose magnetic particles) and the acid added (1% TFA or 3% FA). Acetonitrile was set to a concentration estimated to be close to the optimum in order to achieve a higher glycopeptides recovery rate and a higher non-glycopeptide removal rate.

Washing with a lower acetonitrile concentration can improve the non-glycopeptide removal rate, thereby increasing the degree of glycopeptide purification.

Meanwhile, a lower acetonitrile concentration tends to result in reduced glycopeptide retention.

Presumably, the cellulose magnetic particles have a larger difference between the acetonitrile concentration at which non-glycosylated peptides are no longer retained and the acetonitrile concentration at which glycopeptides are sufficiently retained, compared with carboxyl group-modified magnetic particles, making it easier to increase the degree of glycopeptide purification.

### <1-2-2. Comparison of abundance of detected peptides>

For the data-dependent analysis and Full MS-only measurement data under each condition, alignment was performed using Progenesis QI for proteomics, and peptide search including N-linked glycosylation was performed using Byonic search, whereby peptide identification and quantitative values were obtained from the Full MS-only measurement data. Quantitative comparisons among the conditions were then performed based on these quantitative values.

Fig. 3 shows the abundance (sum) of detected glycopeptides with N-linked glycosylation.

No remarkable difference was observed in the sum of the detection signals of the glycopeptides.

As a whole, the abundance was slightly higher when the carboxyl group-modified magnetic particles were used (A and C) than when the cellulose magnetic particles were used (E and G), indicating that a higher recovery of glycopeptides was achieved.

Fig. 4 shows the abundance (sum) of detected non-glycopeptides without N-linked glycosylation. It is the sum of the detection signals of the non-glycopeptides, which serve as interfering substances in glycopeptide detection.

Remarkable differences were observed depending on the conditions.

As a whole, the abundance was lower when the cellulose magnetic particles were used (E and G) than when the carboxyl group-modified magnetic particles were used (A and C), indicating that a higher degree of glycopeptide purification was achieved when the cellulose magnetic particles were used (presumably, the higher degree of purification leads to an increase in the number of glycopeptides identified by data-dependent MS² analysis.

Under the conditions in which TFA-HILIC purification was performed after on-bead digestion, the degree of purification was higher when the cellulose magnetic particles were used (E) than when the carboxyl group-modified magnetic particles were used (A).

The abundance of detected non-glycopeptides tended to be low when the cellulose magnetic particles were used. The abundance was slightly lower particularly under the condition (E) in which TFA-HILIC purification was performed after on-bead digestion than under the condition (G) in which HILIC was performed using formic acid (FA).

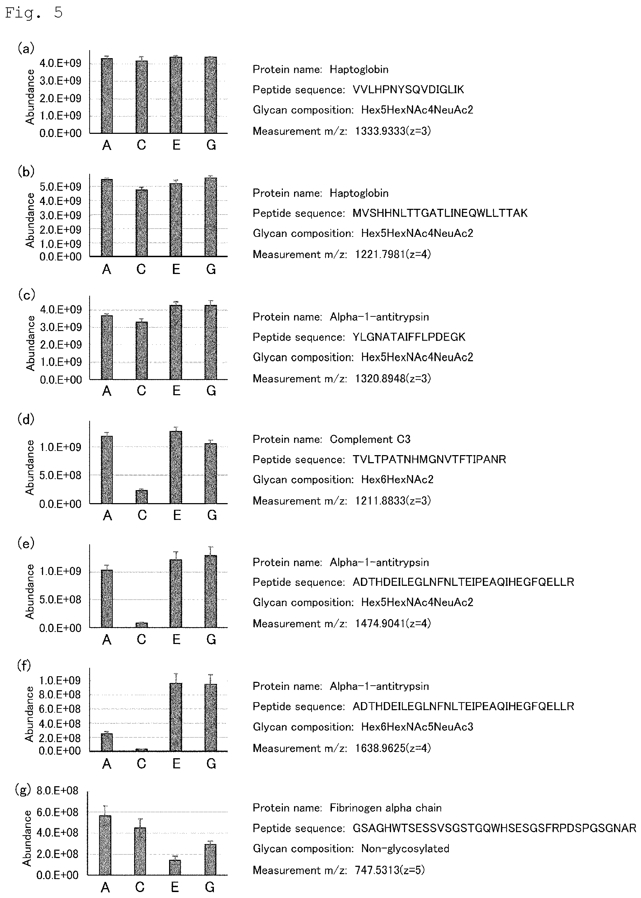

Fig. 5 shows representative examples of quantitative values of peptides derived from major blood glycoproteins.

As shown in Fig. 5, no significant difference was observed in the overall glycopeptide yield between when the carboxyl group-modified magnetic particles were used and when the cellulose magnetic particles were used for on-bead digestion and TFA-based HILIC purification (Conditions A and E). Even when glycopeptides derived from major blood glycoproteins were analyzed individually, the difference was small (a-c). Meanwhile, in some glycopeptides, the yield was low under Conditions A and C in which the carboxyl group-modified magnetic particles were used, and the abundance was higher under Conditions E and G in which the cellulose magnetic particles were used (d-f). The abundance of non-glycopeptide moieties derived from glycoproteins (fibrinogen alpha chains) was high under Conditions A and C in which the carboxyl group-modified magnetic particles were used, and the abundance was low under Conditions E and G in which the cellulose magnetic particles were used. The abundance was particularly low under Condition E in which TEF was used (g).

The carboxyl group-modified magnetic particles require a higher acetonitrile concentration for retention of (glyco)peptide molecules. Meanwhile, high acetonitrile concentrations have been reported to readily induce aggregation of glycan molecules, which may be lost during the HILIC purification process. This is particularly the case for glycopeptides with large glycans and peptides rich in hydrophilic residues. Thus, some molecules may form fine aggregates without being retained on the magnetic particles, and may therefore be removed during washing. Since TFA has a greater peptide-solubilizing ability than formic acid, a greater amount of highly hydrophilic glycopeptides may be lost when formic acid is used (d: oligomannose, f: triantennary). Presumably, such aggregation is less likely to occur with the cellulose magnetic particles because they are operated at lower acetonitrile concentrations.

### Test Example 2. Comparison between on-bead digestion and in-solution digestion using cellulose magnetic particles

### <2-1. Method>

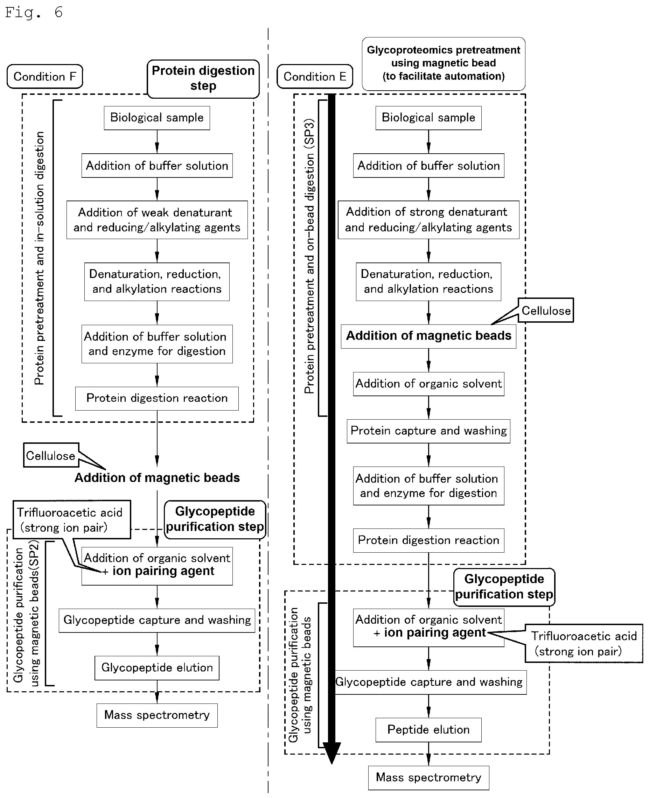

The digestion methods were compared. For each condition, experimental procedures were carried out in parallel using three samples. Table 2 shows an overview of each condition. Fig. 6 shows an overview of the experimental procedure.

**Table 2**

| Condition | Digestion Condition | HILIC Purification Solution | Magnetic Particles |
|---|---|---|---|
| E | On-bead | 1% TFA 82.5% ACN | ReliaPrep Resin (cellulose magnetic particles; Promega) |
| F | In-solution | 1% TFA 82.5% ACN | ReliaPrep Resin |

On-bead protein digestion and glycopeptide purification in Condition E were performed as in Test Example 1. Glycopeptide redissolution and LC/MS measurement were performed as in Test Example 1.

In-solution protein digestion and glycopeptide purification in Condition F were performed as follows.

### <2-1-1. Protein denaturation, reduction, and alkylation>

As a starting sample, an amount equivalent to 10 µL of plasma that had been depleted of albumin and IgG and centrifugally dried was used. The operation was performed in a 1.5-mL low protein-binding polypropylene tube (ProteinLobind, Eppendorf). 50 µL of a 2-fold concentrated buffer solution containing surfactants for sample redissolution and promotion of digestion by denaturation (4.8 mM sodium deoxycholate (SDC), 4.8 mM sodium lauroyl sarcosinate (SLS), and 200 mM Tris-HCl; pH 8.5) was added. 10 µL of 100 mM tris(2-carboxyethyl)phosphine hydrochloride (TCEP-HCl) for disulfide bond reduction, 10 µL of 400 mM chloroacetamide (CAA) for alkylation, and 28 µL of ultrapure water for dilution were added. The sample was redissolved by shaking in a thermomixer at 1,000 rpm and 25°C for 1 min, and was then subjected to denaturation, reduction, and alkylation reaction by heat treatment (95°C, 10 min).

### <2-1-2. In-solution protein digestion>

After the sample solution was cooled to about room temperature, 10 µL of 20 mM CaCl₂ and 2 µL of a protease solution (0.5 µg/µL trypsin/Lys-C mix, 50 mM acetic acid) for stabilizing the digestive enzyme was added. After the sample was stirred by shaking in a thermomixer at 1,000 rpm and 25°C for 1 min, the sample was left to stand at 37°C for 16 h for an enzyme digestion reaction.

### <2-1-3. HILIC purification of glycopeptides>

First, the droplets were spun down by flash centrifugation (tabletop microcentrifuge). 20 µL of a 50 µg/µL mixed magnetic particle solution was added thereto. ReliaPrep Resin (equivalent to 1 mg of magnetic particles; available from Promega) was used as the magnetic particles.

200 µL of a glycopeptide loading solution for retaining glycopeptides on the beads (acetonitrile (ACN) containing 1% (v/v) trifluoroacetic acid (TFA)) was first added to the above, and the digestion reaction was terminated. Then, 10 µL of a standard glycopeptide solution (1 µM sialylglycopeptide, 1 µM G2-glycopeptide; available from Tokyo Chemical Industry Co., Ltd.) was added thereto, followed by shaking in a thermomixer at 1,000 rpm and 25°C for 30 sec.

510 µL of the glycopeptide loading solution was further added. Glycopeptides were captured by shaking in a thermomixer at 1,500 rpm and 25°C for 30 min. The droplets were spun down by flash centrifugation, and the tube containing the sample solution was placed on a magnetic stand and left to stand for 2 min. The supernatant was then removed.

Further, 800 µL of a wash solution (82.5% (v/v) acetonitrile containing 1% TFA) was added for a washing treatment, followed by shaking at 1,500 rpm and 25°C for 30 min. The droplets were spun down by flash centrifugation, and the tube containing the sample solution was placed on the magnetic stand and left to stand for 2 min, and the supernatant was then removed. This operation was repeated twice.

Subsequently, while the tube containing the sample-beads was placed on the magnetic stand, 800 µL of a TFA rinse solution (98% (v/v) ACN) was added to remove TFA surrounding the beads. After leaving to stand for 2 min, the supernatant was removed. Then, a 300 µL of a neutral elution solution (30% (v/v) acetonitrile containing 20 mM ammonium formate) was added to elute glycopeptides from the beads, followed by shaking in a thermomixer at 1,000 rpm and 25°C for 10 min. After leaving to stand for 5 min on the magnetic stand, the supernatant separated from the beads was collected, and transferred to a fresh low-binding 1.5-mL polypropylene tube, and the solution was dried using a centrifugal evaporator.

### <2-2. Results>

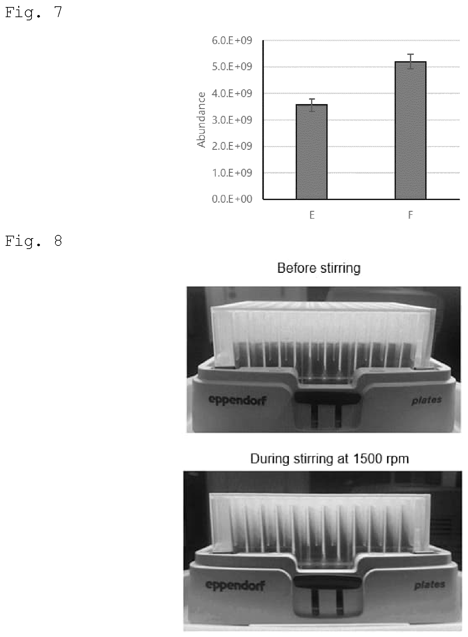

Fig. 7 shows the abundance (sum) of detected non-glycopeptides without N-linked glycosylation.

The sum of the detection signals of the non-glycopeptides, which serve as interfering substances in glycopeptide detection, was lower when on-bead digestion was performed (Condition E) than when in-solution digestion was performed (Condition F).

Fig. 8 shows photographs of glycopeptides during HILIC purification.

After protein digestion was performed in a deep well plate (Protein LoBind (registered trademark) Plates, Eppendorf), 200 µL of a glycopeptide loading solution (acetonitrile (ACN) containing 1% (v/v) trifluoroacetic acid (TFA)) was added, and the digestion reaction was terminated. Then, 10 µL of a standard glycopeptide solution added thereto, and 310 µL of the glycopeptide loading solution was further added, followed by shaking in a thermomixer at 1,500 rpm. Shaking and stirring at 1,500 rpm did not cause the solution in the deep well to overflow.

### Test Example 3. Particle sedimentation test

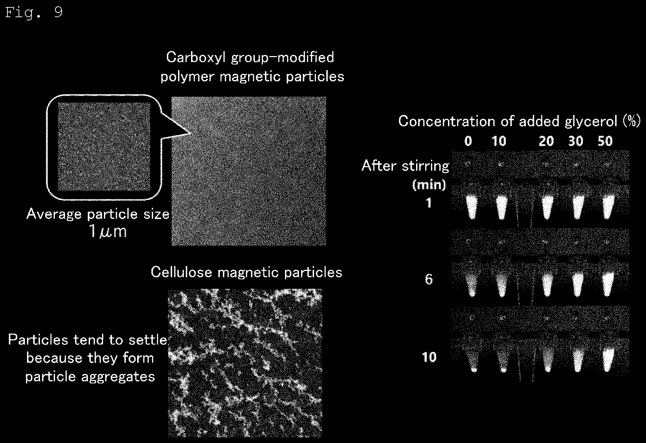

A carboxyl group-modified polymer magnetic particle suspension and a cellulose magnetic particle suspension were dropped onto a plastic petri dish and observed under an inverted microscope. Fig. 9 shows the microscopic magnified images. The cellulose magnetic particles show large particle aggregate formation compared with the carboxyl group-modified polymer magnetic particles having a particle size of about 1 µm.

A container containing the cellulose magnetic particle suspension (Table 1 in Test Example 1) was set on a magnetic stand, the supernatant (water as the original storage solution containing <0.1% sodium azide) was separated and removed, and the container was removed from the magnetic stand. Then, aqueous glycerol solutions of various concentrations were added and stirred. Fig. 9 shows photographs of the exterior of the container 1 minute, 6 minutes, and 10 minutes after stirring. Particle settling was suppressed by the addition of glycerol. A higher glycerol concentration more effectively suppressed particle settling.

### Test Example 4. Evaluation of the combined effect of ion-pairing reagent

As starting samples, 2.5 µL of untreated serum (a commercial product, purchased from Cosmo Bio) and its serum treated with a serum albumin and immunoglobulin depletion resin (High-Select HSA/Immunoglobulin Depletion Resin, purchased from Thermo Fisher) (HSA & Ig-dep serum, equivalent to 10 µL) were used.

### Protein denaturation, reduction, and alkylation

A sample that had been transferred to a 1.5-mL low protein-binding polypropylene tube (ProteinLobind, available from Eppendorf) and centrifugally dried prior to preparation was used. A solution for denaturing, reducing disulfide bonds in, and alkylating sample proteins (1% (w/v) sodium dodecyl sulfate (SDS), 10 mM tris(2-carboxyethyl)phosphine hydrochloride (TCEP-HCl), 40 mM chloroacetamide (CAA)) was added. The sample was redissolved by shaking in a thermomixer at 1,000 rpm and 25°C for 1 min, and was then subjected to denaturation, reduction, and alkylation reaction by heat treatment (95°C, 10 min).

### Protein washing using magnetic particles

After the sample solution was cooled to about room temperature, a 50 µg/µL cellulose magnetic particle suspension (ReliaPrep Resin, available from Promega) was added. The amount added was adjusted to 40 µL (equivalent to 2 mg) in the case of the untreated serum and 30 µL (equivalent to 1.5 mg) in the case of the HSA & Ig-dep serum, so that the weight of the magnetic particles was about 10 times that of the sample protein. The solution was mixed by shaking in a thermomixer at 1,000 rpm and 25°C for 1 min. Subsequently, in order to aggregate proteins on the beads, ethanol (final concentration: 80% v/v; 560 µL in the case of the untreated serum, and 520 µL in the case of the HSA & Ig-dep serum) was added, followed by shaking in a thermomixer at 1,000 rpm and 25°C for 10 min. The tube containing the sample solution was placed on a magnetic stand and left to stand for 2 min. The supernatant was then removed by pipetting while the magnetic beads were collected on the tube wall using a magnet. For washing, an additional 800 µL of 80% (v/v) ethanol was added thereto. After leaving to stand for 2 min, the supernatant was removed. This washing operation was repeated three times.

### Digestion of proteins on magnetic particles

Subsequently, 50 µL of a 2-fold concentrated buffer solution containing surfactants for sample redissolution and promotion of digestion (4.8 mM SDC, 4.8 mM SLS, and 200 mM Tris-HCl; pH 8.5) was added. The sample was resuspended by shaking in a thermomixer at 2,000 rpm and 25°C for 5 min. 50 µL of an enzyme solution for protein digestion (0.02 µg/µL trypsin/Lys-C mix, 4 mM CaCl₂, 2 mM acetic acid (the acetic acid is derived from the enzyme reconstitution solution)) was added thereto, and a digestion reaction was carried out in a thermomixer at 1,000 rpm and 37°C for 16 hours.

### Glycopeptide purification

The composition of the glycopeptide loading solution for retaining glycopeptides on the beads and the composition of the wash solution for use in the washing treatment vary depending on the ion pairing agent added thereto.

Table 3 shows the solutions for HILIC purification for comparison of the addition of an ion-pairing reagent to the wash solvent (wash solution) in untreated serum samples.
(1) 1% TFA is added.
(2) 5% formic acid is added.
(3) 5% formic acid and 0.1% TFA are added. (Only formic acid is added to the glycopeptide loading solution.)

**Table 3**

| | Glycopeptide Loading Solution | Solution Volume (uL) | Wash Solution | Solution Volume (uL) |
|---|---|---|---|---|
| (1) | 1% TFA in Acetonitrile | 580 | 1% TFA in 82.5% Acetonitrile | 800 |
| (2) | 6% Formic acid in Acetonitrile | 560 | 5% Formic acid in 78% Acetonitrile | 800 |
| (3) | 6% Formic acid in Acetonitrile | 560 | 5% Formic acid and 0.1% TFA in 80% Acetonitrile | 800 |

Table 4 shows the solutions for HILIC purification for comparison of the addition of an ion-pairing reagent to the wash solvent (wash solution) in the untreated serum and HSA- and Ig-depleted serum.
(1) 1% TFA is added.
(2) 5% formic acid and 0.1% TFA are added.

**Table 4**

| | Glycopeptide Loading Solution | Solution Volume (uL) | Wash Solution | Solution Volume (uL) |
|---|---|---|---|---|
| (1) | 1% TFA in Acetonitrile | 580 | 1% TFA in 82.5% Acetonitrile | 800 |
| (2) | 5% Formic acid and 0.1% TFA in Acetonitrile | 600 | 5% Formic acid and 0.1% TFA in 80% Acetonitrile | 800 |

First, the droplets were spun down by flash centrifugation (tabletop microcentrifuge).

100 µL of a glycopeptide loading solution corresponding to each condition for retaining glycopeptides on the beads was first added, and the digestion reaction was terminated. Then, 10 µL of a standard glycopeptide (sialylglycopeptide; Tokyo Chemical Industry Co., Ltd.) solution (untreated serum: 1 µM; HSA & Ig-dep serum: 2 µM) was added thereto, followed by shaking in a thermomixer at 1,000 rpm and 25°C for 30 sec.

The glycopeptide loading solution corresponding to each condition was further added. Tables 3 and 4 show the total amounts added. Glycopeptides were captured by shaking in a thermomixer at 1,500 rpm and 25°C for 30 min. The droplets were spun down by flash centrifugation, and the tube containing the sample solution was placed on a magnetic stand and left to stand for 2 min. The supernatant was then removed.

Further, a wash solution was added for a washing treatment, followed by shaking at 1,500 rpm and 25°C for 30 min. The droplets were spun down by flash centrifugation, and the tube containing the sample solution was placed on a magnetic stand and left to stand for 2 min. The supernatant was then removed. This operation was repeated twice.

Subsequently, while the tube containing the sample-beads was placed on the magnetic stand, 800 µL of a TFA rinse solution (98% (v/v) ACN) was added to remove TFA surrounding the beads. After leaving to stand for 2 min, the supernatant was removed. Then, a 300 µL of a neutral elution solution (30% (v/v) acetonitrile containing 20 mM ammonium formate) was added to elute glycopeptides from the beads, followed by shaking in a thermomixer at 1,000 rpm and 25°C for 10 min. After leaving to stand for 5 min on the magnetic stand, the supernatant separated from the beads was collected, and transferred to a fresh low-binding 1.5-mL polypropylene tube, and the solution was dried using a centrifugal evaporator.

### Glycopeptide redissolution and LC/MS measurement (common to all conditions)

The dried glycopeptide sample was redissolved in 50 µL of an aqueous solution containing 1% (v/v) acetic acid and 2% (v/v) acetonitrile, transferred into a filter (Millex LH 45 µm, 4 mM, Merck Millipore) mounted on a low-binding 0.5-mL PP tube, and passed through and filtered by centrifugation at 2,000 × g and 25°C for 2 min. For the measurement, the glycopeptide solution was transferred into a 96-well plate for low protein-binding PCR (Sarstedt), and a 0.1% (v/v) aqueous formic acid solution was added for dilution to obtain a 1:50 diluted plasma glycopeptide solution (0.1 µL plasma/µL), which was then set in an autosampler for high-performance liquid chromatography (HPLC).

The glycopeptide sample was analyzed using a method based on liquid chromatography-mass spectrometry. The instruments used were a nano-flow high-performance liquid chromatography (HPLC) system (Vanquish-Neo UHPLC system, Thermo Fisher Scientific) and a quadrupole-Orbitrap mass spectrometer (Orbitrap Exploris 240, Thermo Fisher Scientific).

As the mobile phases for HPLC, mobile phase A was ultrapure water containing 0.1% (v/v) formic acid, and mobile phase B was acetonitrile containing 0.1% (v/v) formic acid. The column was an emitter-integrated nano-HPLC capillary column (C18, 0.075 × 150 mM, 3 µm; available from Nikkyo Technos Co., Ltd.). The flow rate during sample separation was set to 0.30 µL/min, and the column temperature was set to 40°C. The proportion of mobile phase B was maintained at 0% from 0 to 2 min of the elution, linearly increased to 1% from 2 to 2.5 min, to 44.5% from 2.5 to 60.5 min, and then to 95% from 60.5 to 65.5 min.

For the mass spectrometer, the ion source settings were as follows: spray voltage: 1800 V; and ion transfer tube temperature: 275°C.

The Full MS scan settings were as follows: Orbitrap resolution: 120,000; scan range: 500-1800 m/z; RF-lens: 70%; normalized AGC Target: 300%; maximum injection time: 50 ms; microscans: 1; and polarity: positive. The filter settings for data-dependent MS² were as follows: MIPS: peptide; intensity threshold: 1.0e4; charge state: 2-8; dynamic exclusion duration: 20 s; and dynamic exclusion mass tolerance: High, 10 ppm; Low, 10 ppm. The data-dependent MS² (ddMS²) acquisition settings were as follows: data dependent mode: cycle time (1.5 s); isolation window: 1.6 m/z; collision energy type: normalized; HCD collision Energy: 20, 30, 40 (%); Orbitrap resolution: 30,000; scan range: 150-2000 m/z; normalized AGC Target: 200%; and maximum injection time: 75 ms. The acquired LC/MS raw data files were searched using peptide analysis software for glycopeptides, Byonic (Protein Metrics), for glycopeptide identification, and were analyzed using Proteome discoverer (Thermo Fisher) for data alignment in combination with Byonic search to perform glycopeptide identification and quantitative comparison.

### Results

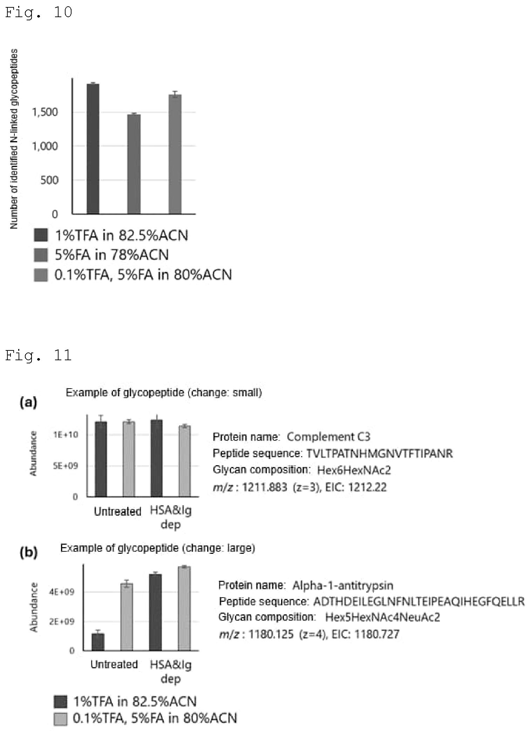

- The number of identified glycopeptides was the highest when the wash solution to which only TFA (1%) was added as the ion pairing agent was used. The number was lower when the wash solution to which only formic acid (5%) was added was used. The wash solution to which a mixture of formic acid and TFA (5% and 0.1%) was added showed a higher number of identified glycopeptides than the wash solution to which only formic acid was added (Fig. 10).
- The glycopeptide recovery rate shows that the effect of the type of ion-pairing reagent in the HILIC wash solvent was small in the abundant protein (serum albumin and immunoglobulin)-depleted (HSA & Ig-dep) samples (Figs. 11(a) and 11(b), HSA & Ig-dep.)
- In the untreated serum, glycopeptides with highly hydrophilic peptide chains were less affected by the ion-pairing reagent in the wash solution (e.g., Complement C3 [74-94] Hex2HexNAc6; Fig. 11(a)).
- In contrast, the recovery of the glycopeptides containing peptide chains rich in hydrophobic residues was low in the wash solvent to which only TFA was added. The use of the wash solvent containing a mixture of formic acid and TFA was found to significantly improve the recovery rate (e.g., Alpha-1-antitrypsin [94-125] Hex5HexNAc4NeuAc2; Fig. 11(b)).
- The results obtained are summarized below.
   (1) The use of an acetonitrile-based wash solvent to which a mixture of formic acid and TFA was added was found to improve the recovery rate in the glycopeptide preparation from untreated serum/plasma compared with the washing solvent to which only TFA was added as the ion-pairing agent.
   (2) In the analysis of untreated (non-depleted) serum, a synergistic effect of TFA and formic acid was observed for the first time.
   (3) Although abundant protein-depleted serum and plasma have the advantage of facilitating deeper analytical coverage, the procedures and costs required for sample preparation are high.
   (4) In the analysis of untreated serum or plasm, the sample can proceed almost directly to glycopeptide preparation, enabling high-throughput and low-cost analysis suitable for large-scale analysis.
   (5) The study on ion-pairing reagents led to improved reliability of sample preparation for the analysis of untreated serum and plasma.

## Claims

1. A method for producing a glycopeptide sample, comprising:
step (3) of contacting particles retaining a protein on surfaces thereof with a protease;
step (4) of adding an organic solvent after step (3);
and
step (5) of washing particles obtained in step (4),
wherein
the particles are hydrophilic polymer-coated particles,
and
in step (4), an ion pairing agent is added together with the organic solvent.

2. The production method according to claim 1, wherein the hydrophilic polymer-coated particles are polysaccharide-coated particles.

3. The production method according to claim 2, wherein the polysaccharide-coated particles are cellulose-coated particles.

4. The production method according to claim 1, further comprising, prior to step (3), step (2) of contacting the protein with the particles in a solution containing an organic solvent to retain the protein on surfaces of the particles.

5. The production method according to claim 4, wherein step (2) comprises a step of dispensing a previously prepared particle suspension containing the particles and a thickening agent.

6. The production method according to claim 5, wherein the thickening agent is glycerol.

7. The production method according to claim 1, wherein the hydrophilic polymer-coated particles are carboxylic acid polymer-coated particles.

8. The production method according to claim 1, wherein the hydrophilic polymer-coated particles are magnetic particles.

9. The production method according to claim 1, wherein the ion pairing agent is an organic acid.

10. The production method according to claim 9, wherein the ion pairing agent contains a halogenated short-chain fatty acid.

11. The production method according to claim 10, wherein the ion pairing agent is a mixture containing a halogenated short-chain fatty acid and a non-halogenated short-chain fatty acid.

12. The production method according to claim 1, wherein the organic solvent is at least one selected from the group consisting of alcohols, acetonitrile, and acetone.

13. The production method according to any one of claims 1 to 12, wherein all of the steps are performed in a single container.

14. The production method according to any one of claims 1 to 12, wherein the glycopeptide sample is a mass spectrometry sample.

15. A glycopeptide sample obtained by the production method according to any one of claims 1 to 12.

16. A method for analyzing protein glycosylation, comprising a step of subjecting the glycopeptide sample according to claim 15 to mass spectrometry.
